# EUROPÄISCHE PATENTSCHRIFT

(11) **EP 4 118 969 B1**
(45) Veröffentlichungstag und Bekanntmachung des Hinweises auf die Patenterteilung: **28.02.2024**
(21) Anmeldenummer: 22183584.6
(22) Anmeldetag: 07.07.2022
(51) Int. Cl.: A21C 9/08, A21C 13/00, A21C 15/00

(54) **ANLAGE UND VERFAHREN ZUR KONTINUIERLICHEN HERSTELLUNG VON BACKWAREN**
METHOD AND ASSEMBLY FOR CONTINUOUS MANUFACTURING OF BAKERY PRODUCTS
INSTALLATION ET PROCÉDÉ DE FABRICATION CONTINUE DE PRODUITS DE BOULANGERIE

(30) Priorität: 12.07.2021 DE 102021207341
(43) Veröffentlichungstag der Anmeldung: 18.01.2023
(73) Patentinhaber: Kuchenmeister GmbH, 59494 Soest (DE)
(72) Erfinder: TROCKELS, Hans-Günter, 59494 Soest (DE); FELDEWERT, Wolfgang, 59519 Möhnesee (DE)
(74) Vertreter: Maikowski & Ninnemann Patentanwälte Partnerschaft mbB

(56) Entgegenhaltungen:
- WO-A1-2016/005264
- CN-A- 106 264 100
- CN-A- 110 876 392
- DE-A1-102018 213 963
- US-B1- 10 092 011

## Beschreibung

Die vorliegende Erfindung betrifft eine Anlage zur Durchführung eines Verfahrens zur kontinuierlichen Herstellung von Backwaren und ein mit dieser Anlage durchgeführtes Verfahren.

Produktionslinien zur industriellen Herstellung von Backwaren bestehen typischerweise aus komplexen Maschinen und Transportanlagen, die definierte Prozessschritte und logistische Funktionen in einer festgelegten Abfolge realisieren.

Zu den Prozessschritten gehören: die Teigherstellung mit Knetmaschinen, der Teigtransport zu den Dosieranlagen, die Dosierung des Teiges in Formen oder Formverbänden, der Transport der Formen zur Gäranlage, die Bearbeitung der Teigoberfläche nach dem Gärprozess, wie Besprühen mit Flüssigkeiten, Perforieren der Gebäckhaut oder Bestreuen mit Saaten, das Bedeckeln der Formen, der Transport der Formen zum Ofen, die mechanische Entnahme der Formen aus dem Ofen durch Rutschen, Transportbänder und Wendevorrichtungen, das Stürzen der Produkte aus den Formen mit Stürzvorrichtungen, das Ablegen der Produkte auf Kühlbänder, der Kühlprozess, das Einlegen der Gebäcke in Schneidemaschinen mit Sortier- und Transportbänder oder durch manuelle Tätigkeit, Verpackungsprozess mit einer Verpackungsmaschine, Transport zur Kommissionierungseinheit.

Die industrielle Produktion von Backwaren hat sich in den letzten Jahren zunehmend verändert. Ein Fokus der Entwicklung ist die Verwendung von komplexen Produktionsanlagen und Produktionslinien an die Herstellung von verschiedenen Teigsorten.

So wird in der WO 2016/005264 A1 ein multivariables Backverfahren zur kontinuierlichen Herstellung von Backwaren beschrieben, in welchem eine erste Teigphase in einer ersten Knetvorrichtung hergestellt wird, gefolgt von einer Entspannung der ersten Teigphase und Eintragen der entspannten ersten Teigphase in eine zweite Knetvorrichtung zur Herstellung einer zweiten Teigphase. Aus der zweiten Teigphase wird ein Teigband gebildet, welches gewalzt, entspannt und gefaltet wird. Das gefaltete Teigband wird wiederum gewalzt und das gewalzte Teigband wird in eine vorbestimmte Anzahl von Teiglingen geschnitten, die anschließend in Backformen gegärt und gebacken werden. Dieses Verfahren ermöglicht die Verwendung einer Fertigungslinie zur Herstellung von Backwaren, insbesondere aus Weizenteigen unterschiedlicher Größe und Form in einer Fertigungslinie. Das Verfahren weist Redundanzen auf, die einen Austausch von Produkten zwischen den Backlinien ermöglicht. Das Verfahren ist nach dem Prinzip eines Baukastensystems aufgebaut, wodurch eine multivariable Betriebsgestaltung erreicht wird.

Das in der WO 2019/180009 A1 beschriebene Verfahren zur kontinuierlichen Herstellung von Backwaren, insbesondere Backwaren aus Weizenteigen, unterscheidet sich von dem in der WO 2016/005264 A1 beschriebenen Verfahren darin, dass der Teig aus einer Knetvorrichtung (1) in einer Vorrichtung aus Förderschnecke und Exenterschneckenpumpe depolymerisiert und entgast wird. Anschließend wird depolymerisierte Teig zu einem Teigband geformt und das Teigband gefaltet und in eine vorbestimmte Anzahl von Teiglingen geschnitten. Dieses Verfahren ermöglicht die Verwendung einer nur geringfügig anzupassenden Fertigungslinie zur Herstellung von Weizengebäck mit unterschiedlicher Struktur und Größe.

Eine Gemeinsamkeit der bisher bekannten Produktionslinien ist deren komplexe, geschlossene und damit meist unveränderliche Einheit. Dies führt zu einem großen Platzbedarf und auch zu einer relativ geringen Flexibilität, z.B. in Hinblick auf Produktionsmengen.

Aufgabe der vorliegenden Erfindung war daher, die Bereitstellung einer Anlage zur Herstellung von Backwaren, die eine erhöhte Flexibilität in der Anordnung der Produktionslinien ermöglicht.

Diese Aufgabe wird erfindungsgemäß mit einer Anlage mit den Merkmalen des Anspruchs 1 und einem Verfahren mit den Merkmalen des Anspruchs 10 gelöst.

Entsprechend wird eine Anlage zur Durchführung eines Verfahrens zur kontinuierlichen Herstellung von Backwaren bereitgestellt, die folgende Elemente umfasst:
- mindestens eine Knetvorrichtung zur Herstellung eines Teiges,
- mindestens eine Vorrichtung zum Transport des Teiges zu mindestens eines Dosieranlage zur Portionierung von Teiglingen und Füllen von Formen mit den Teiglingen;
- mindestens ein erstes Robotersystem umfassend mindestens einen mehrachsigen, insbesondere sechsachsigen Roboter mit mindestens einem Greifersystem zur Bereitstellung von Formendeckeln und zum Abdecken der mit den Teiglingen bestückten Formen,
- mindestens eine Gärvorrichtung,
- mindestens einen Backofen zum Backen der Teiglinge in den abgedeckten Formen zu Backwaren,
- mindestens ein zweites Robotersystem umfassend mindestens einen mehrachsigen, insbesondere siebenachsigen Master-Roboter, und mindestens einen mit dem Master-Roboter zusammenwirkenden bzw. kooperierenden Slave-Roboter,
   wobei der mindestens eine Master-Roboter mit mindestens einem Greifersystem die Abnahme der Formendeckel von den Formen nach dem Backprozess, und Übergabe der abgedeckelten Formen an den mindestens einen Slave-Roboter bewirkt, und
   wobei der mindestens eine Slave-Roboter die abgedeckelten Formen und/oder Formenverbände zu mindestens einem Ablagesystem transportiert, die Backwaren aus den Formen entnimmt bzw. entleert und die Backwaren auf mindestens eine Transporteinheit zur Kühlung und Konditionierung ablegt;
- mindestens ein drittes Robotersystem umfassend mindestens einen mehrachsigen, insbesondere sechsachsigen Roboter, mit mindestens einem Greifersystem zur Entnahme der abgekühlten Backwaren aus der Transporteinheit und Übergabe an mindestens eine Vorrichtung zum Schneiden der Backwaren und/oder eine Vorrichtung zum Verpacken der Backwaren; und
   - optional mindestens ein viertes Robotersystem umfassend mindestens einen mehrachsigen Roboter mit mindestens einem Greifersystem zur Entnahme der geschnittenen und/ oder verpackten Backwaren aus der Schneid - und/oder Verpackungsvorrichtung und weiteren Ablage in mindestens einem Behälter zur weiteren Verarbeitung z.B. in mindestens einer Pasteurisieranlage;
   - optional mindestens ein fünftes Robotersystem zur Entnahme der Produkte aus den Behältern, z.B. aus Pasteurisationsbehältern und Ablage in Kartons oder ähnlichen Umverpackungen.

Die vorliegende Anlage ermöglicht eine Verbindung einzelner Teilsysteme von komplexen Fertigungslinien durch robotergestützte, KI-basierende Transport- und Verarbeitungseinheiten, die multifunktionell einsetzbar und für weitere, komplexe Liniensysteme verfügbar sind. Dadurch können Liniensysteme beliebig ergänzt, erweitert und miteinander kombiniert werden.

Insbesondere zeichnet sich die vorliegende Anlage durch die Verwendung von mehreren mehrachsigen, multifunktionellen Robotersystemen aus, die es erlauben, unterschiedliche Prozesse und Aufgaben gleichzeitig und parallel und nach einem programmierten, zeitlcihen Ablauf durchzuführen. So kommt den mehrachsigen Robotern sowohl eine technologische Funktion als auch eine Transportfunktion zu.

Aus der WO 2016/005264 A1 ist zwar auch ein Hinweis auf den Einsatz von Robotern in einem Backverfahren zu entnehmen, allerdings führen diese lediglich Einmalaufgaben in der Logistik durch-

Nach dem Bestücken der Backformen mit den Teiglingen und Gärung der Teiglinge in den Backformen entnimmt das erste Robotersystem Formendeckel und deckt die mit den Teiglingen bestückten Formen und/oder Formenverbände mit den entnommenen Formendeckeln ab. Hierzu verwendet das erste Robotersystem ein Greifersystem, welches mindestens einem Greifer für Deckel und Formen umfasst.

Das Greifersystem entnimmt die Formendeckel aus einem Magazin, welches durch ein erstes fahrerloses Transportsystem (FTS) bereitgestellt wird. Das Greifersystem bearbeitet mit geschlossenem Greifer und dadurch fixiertem Deckel die Teighaut und bedeckelt durch Drehung der Achsen im nächsten Arbeitsschritt die Form.

Wie noch weiter unten erläutert, werden die Formendeckel durch das fahrerlose Transportsystem oder auch Transportbänder nach dem Backprozess von der Vorrichtung zur Abnahme der Formendeckel bereitgestellt; d.h. das fahrerlose Transportsystem bzw. die Transportbänder bewirken die Zirkulation der Formendeckel zwischen dem Schritt der Bedeckelung der Backformen vor dem Backprozess und dem Schritt der Abdeckelung der Backformen nach dem Backprozess.

In einer Ausführungsform der vorliegenden Anlage umfasst der mindestens eine mehrachsige Roboter des mindestens einen ersten Robotersystem mindestens ein Nadelsystem zur Perforierung der während des Gärprozesses gebildeten Teighaut auf den Teiglingen, wobei die Perforierung nach dem Gärprozess aber vor dem Backprozess stattfindet; mindestens eine Sprüheinheit für die Oberflächenbenetzung der Teiglinge, z.B. mit Proteinmischungen, und weitere technologischen Funktionen, insbesondere zur Oberflächenbearbeitung der Teiglinge, wie Einschneiden der Teiglinge oder Bestreuen der Teiglinge mit Saatgütern.

In einer weiteren Ausführungsform der vorliegenden Anlage entnimmt der mindestens eine mehrachsige Roboter des mindestens einen ersten Robotersystems Formen, die von mindestens einem Transportsystem nach dem Backprozess und der Entladung der Backwaren aus den Formen bereitgestellt werden, aus diesem Transportsystem und übergibt diese Formen einem weiteren Transportsystem zur Bereitstellung der Formen für die Teigdosierungsvorrichtung und Vorrichtung zum Bestücken von Formen mit den Teiglingen.

Das Transportsystem kann konventionell aus einem Förderband oder bevorzugt aus einem fahrerlosen Transportsystem (FTS) bestehen. Die Transportsysteme werden gleichzeitig als Puffer für Formen oder Deckel verwendet.

Das erste Robotersystem übernimmt somit als ein System fünf bzw. sechs unterschiedliche Teilfunktionen, die in unmittelbarer oder versetzter zeitlicher Abfolge realisiert werden.

Nach dem Backprozess erfolgen die Formenentleerung und der Transport der Backwaren unter Verwendung des zweiten Robotersystems. In einer Ausführungsform der vorliegenden Anlage legt der mindestens eine Masterroboter des zweiten Robotersystems die von den Formen (nach dem Backprozess und der Ofenentladung) abgenommenen Formendeckel auf ein Transportsystem, bevorzugt einem fahrerlosen Transportsystem (FTS) oder Transportbänder ab. Wie oben bereits angedeutet, transportiert dieses FTS die Formendeckel zu dem mindestens einem ersten Robotersystem, welches die mit den Teiglingen bestückten Formen und/oder Formenverbände abdeckt.

In einer anderen Ausführungsform der vorliegenden Anlage weist das Greifersystem des Master-Roboters ebenfalls weitere Funktionen auf. Diese Funktionen können ein Besprühen der Backwaren mit Lösungen (z.B. mit Dextroselösung), die Höhenkontrolle der Backwaren mittels Laser, Radarsystemen und optische Kontrolle der Oberfläche des Produktes (z.B. Farbkontrolle) umfassen.

In einer weiteren Funktion werden die Formen gegriffen und wahlweise auf die 7. Achse des Master-Roboters oder auf den Slave- Roboter übergeben. Die Wahl zwischen der 7. Achse und dem Slave-Roboter wird durch Rezeptur vorgegeben. So muss z.B im Falle eines Produktes (Teigling, Backware) mit einer runden Form (der Querschnitt der Form ist rund) zweimalgedreht werden, damit die Rundung sich auf der Oberseite befindet.

Eine weitere Funktion des zweiten Robotersystems ist die Palettierung und Depalettierung der Formenverbände in/aus ein Transportsystem.

Der Slave- Roboter trägt das Produkt zur Transporteinheit (Regalwagen), schließt die Greifer, dreht das Produkt und setzt es auf die Ablage der Transporteinheit (Regalwagen).

In einer weiteren Funktion übernimmt der Slave- Roboter sortenspezifisch das Produkt von der 7. Achse des Master-Roboters, besprüht die Oberfläche und legt das Produkt auf die Ablage der Transporteinheit.

Das aus einem siebenachsigen Master-Roboter und einem Slave- Roboter bestehende zweite Robotersystem übernimmt damit sieben bis fünfzehn, vorzugsweise zehn unterschiedliche Teilfunktionen, die in unmittelbarer oder zeitlich versetzter Abfolge realisiert werden.

In einer weiteren Ausführungsform der vorliegenden Anlage ist vorgesehen, dass mindestens ein Transportsystem, bevorzugt ein fahrerloses Transportsystem, die mindestens eine Transporteinheit mit den zur Kühlung und Konditionierung abgelegten Backwaren erfasst und in mindestens einen Kühlraum und/oder mindestens einen Konditionierraum umsetzt und nach einer vorbestimmtem Zeit wiederum zu dem mindestens einen dritten Robotersystem zur Entnahme aus der Transporteinheit und Konfektionierung umsetzt.

Das dritte Robotersystem, das aus einem sechsachsigen Roboter besteht, entleert nach der Kühlung die Transporteinheiten und setzt die Produkte in das Infeed der Schneidemaschinen ab.

Bevorzugt umfasst der mindestens eine Roboter des dritten Robotersystems mindestens eine Sprühvorrichtung. Parallel zur Transportfunktion realisiert der Roboter mit dieser Sprühvorrichtung, die im Greiferwerkzeug integriert ist, die Desinfektion der Oberfläche durch Besprühung mit extrahierten Gewürzextrakten oder anderen, fungizid wirkenden Lösungen.

Das vierte Robotersystem übernimmt nach der Verpackung die Entnahme der verpackten Produkte von der Verpackungsmaschine und legt die Packungen in ein Behälter. Die vollen Behälter werden auf ein Transportsystem gestapelt und durch Förderfahrzeuge, bevorzugt einem FTS, zur Pasteurisieranlage transportiert.

Das fünfte Robotersystem dient der abschließenden Entnahme der Produkte aus den Behältern, z.B. aus Pasteurisationsbehältern und der Ablage in Kartons oder ähnlichen Umverpackungen.

Wie bereits mehrmals angedeutet, werden in einer bevorzugten Ausführungsform fahrerlose Transportsysteme (FTS) als Transportsysteme verwendet.

Die fahrerlosen Transportsysteme übernehmen die logistischen Verbindungen der Prozesselemente des Liniensystems. Sie ersetzen teilweise starre, ortsunveränderliche Transportsysteme. Dadurch können logistische Abläufe variiert und zukünftige technologische Erweiterungen integriert werden.

In einem Ausführungsbeispiel erfassen FTS die Transporteinheiten (Regalwagen), die vorher von einem RFTs, insbesondere dem zweiten Robotersystem mit Backwaren, wie z.B. Brotstangen, beschickt wurden. Die Transporteinheiten werden durch die FTS in einen Kühlraum transportiert und auf einen definierten Platz abgesetzt und registriert.

Nach einer festgelegten Kühlzeit werden die Transporteinheiten vom Kühlraum in den Konditionierraum umgesetzt und nach einer festgelegten Konditionierzeit durch das FTS zum dritten Robotersystem transportiert. Dort erfolgen die Entnahme der Backwaren, wie z.B. Brotstangen aus den Transporteinheiten und die Beschickung der Schneideanlagen.

Die fahrerlosen Transporteinheiten bewegen sich bevorzugt in einem elektronisch abgesicherten Bewegungsbereich. Diese Absicherung kann z.B, durch Rolltore realisiert werden, Im Boden sind die Wartebereiche der FTS durch im Boden integrierte QR- Streifen definiert. Befindet sich ein leerer FTS zur Abholung von Transporteinheiten im Wartebereich, öffnet das Rolltor entsprechend der Höhe des FTS. Die Aufnahmebereiche der Transporteinheiten sind ebenfalls durch ein QR-Streifen festgelegt. Bei beladenen FTS wird das Rolltor in voller Höhe geöffnet. Aufgrund der Erkennung der FTS durch QR-Streifen und den festgelegten Wartebereichen bei Öffnung der Rolltore, wird ein Zugang der Bewegungsbereiche der Roboter durch Personen verhindert. Dadurch entfällt die aufwendige Verwendung von Schleusen, die jeweils mit zwei Rolltoren gesichert sind.

Als Element der vorliegenden Anlage übernehmen die fahrerlosen Transportsysteme folgende Funktionen:
- Transport der in Magazinen gelagerten Backformen, insbesondere von der Entleerung der Backformen zur Bestückung der Backformen;
- Transport der nach dem Backprozess von den Backformen abgenommenen Formendeckel zur Abdeckelungsstation;
- Transport der Regalwagen mit den Transporteinheiten (Regalwagen) zum Kühlraum, Transport innerhalb des Kühlraumes und zur Schneideanlage;
- Rücktransport der entleerten Transporteinheiten (Regalwagen) zur Ausgangsstation;
- Transport von verpackten Backwareneinheiten zu Pasteurisationsanlagen.

Die beschriebenen Transportvorgänge werden von zwei, maximal drei FTS realisiert.

In einer Ausführungsform der vorliegenden Anlage ist vorgesehen, dass die Robotersysteme und Transportsysteme durch ein Kontroll- und Steuerungssystem miteinander verknüpft sind. Die Steuerung basiert auf ein KI-System. Neben der Steuerung der Prozessabläufe werden die Fehler ausgewertet, die Historie der Prozessdaten erfasst und ausgewertet und der Gesamtprozess digital dargestellt.

Mit der beschriebenen Anlage kann ein Verfahren zur kontinuierlichen Herstellung von Backwaren mit den folgenden Schritten durchgeführt werden:
a) Herstellen von mindestens einem Teig in mindestens einer Knetvorrichtung;
b) Transportieren des Teiges zu mindestens einer (Dosier)Anlage zur Bereitstellung bzw, Portionierung von Teiglingen,
c) Dosieren bzw. Ablegen der Teiglinge in Formen;
d) Gärung der Teiglinge in den Formen;
e) Abdecken der mit den Teiglingen bestückten Formen mit Formendeckeln, wobei die Bereitstellung der Formendeckel und das Abdecken der Formen durch mindestens ein erstes Robotersystem umfassend mindestens einen mehrachsigen, insbesondere sechsachsigen Roboter mit mindestens einem Greifersystem ausgeführt wird;
f) Backen der Teiglinge in den Formen zu Backwaren;
g) Abnahme der Formendeckel von den Formen nach dem Backprozess; Ablage der der abgedeckelten Formen auf mindestens einem Transportsystem, Entnahme der Backwaren aus den Formen und Ablegen der Backwaren in mindestens einer Transporteinheit zur Kühlung und Konditionierung, wobei die Abnahme der Formendeckel, Transport, Entnahme und Ablage der Backwaren durch mindestens ein zweites Robotersystem umfassend einen Master-Roboter und einen Slave-Roboter ausgeführt werden;
h) Kühlen und Konditionierung der Backwaren,
i) Entnahme der gekühlten und konditionierten Backwaren von der Transporteinheit durch mindestens ein drittes Robotersystem und Übergabe an mindestens eine Vorrichtung zum Schneiden und/oder eine Vorrichtung zum Verpacken der Backwaren;
j) Schneiden und/oder Verpacken der Backwaren,
k) optional Entnahme der geschnittenen und/oder verpackten Backwaren durch mindestens ein viertes Robotersystem und anschließende Pasteurisierung, und
l) optional Entnahme der Produkte aus den Behältern, z.B. aus Pasteurisationsbehältern und Ablage in Kartons oder ähnlichen Umverpackungen durch mindestens ein fünftes Robotersystem.

Gemäß dem vorliegenden Verfahren wird in einem ersten Schritt ein Teig in mindestens einer Knetvorrichtung hergestellt. Dieser ersten Knetvorrichtung kann sich eine zweite Knetvorrichtung anschließen. Die verwendete Knetvorrichtung kann ein kontinuierlicher Kneter oder ein Batchkneter sein.

Teigbildende Rohstoffe, die in die Knetvorrichtung eingeführt werden, umfassen insbesondere Wasser, Hefe und Trockensubstanz, wie Mehl, Roggenteig, Sauerteig, Emulgatoren und ggf. geringe Mengen an Zucker. Des Weiteren können teigbelastende Rohstoffe in die Teigphase eingeführt. Unter teigbelastenden Rohstoffen werden vorliegend insbesondere Fette, Öle, Aromastoffe, Zucker, Glycerin und Ähnliches verstanden. Die zugegebene Menge an Enzymen liegt zwischen 5 und 150 ppm, bevorzugt zwischen 10 und 100 ppm.

Die Teigtemperatur in der Knetvorrichtung liegt insbesondere in einem Temperaturbereich zwischen 20 und 35 °C, bevorzugt zwischen 22 und 30 °C, ganz besonders bevorzugt 24 bis 29 °C, jeweils in Abhängigkeit des herzustellenden Teiges. Der Durchsatz der Knetvorrichtung wird durch die Einstellung der Drehzahl bestimmt. Dabei ergeben unterschiedliche Knetintensitäten unterschiedliche Gebäckstrukturen.

In einer Variante ist es möglich, dass der Teig aus der Knetvorrichtung anschließend in mindestens eine Vorrichtung umfassend mindestens eine Förderschnecke und mindestens eine Exenterschneckenpumpe zur Depolymerisation und Entgasung des Teiges eingeführt wird. Es kann sich um eine Doppel- oder Dreifachschnecke handeln, mit einer Schneckenlänge zwischen 500 bis 1500 mm, bevorzugt 600 bis 1000mm, und mit einer Steigung zwischen 50 bis 300 mm, bevorzugt 80 bis 200 mm. Die Drehzahl liegt bei 5 bis 50 U/min, bevorzugt 7 bis 30 U/min. Die Verweilzeit des gekneteten Teiges in der Depolymerisationsvorrichtung beträgt zwischen 1 bis 10 min, bevorzugt 2 bis 5 min.

Die so hergestellte Teigmasse wird in mindestens einen Teigbandformer unter Ausbildung eines Teigbandes (bei gleichzeitiger Rekonstruierung der Teigstruktur) eingeführt; Es folgen das Falten des Teigbandes (Laminierung); Einführen des gefalteten (laminierten) Teigbandes in mindestens eine Walzvorrichtung zur Reduzierung der Teigstärke, insbesondere durch eine Kombination von Walzen; Schneiden des Teigbandes unter Verwendung von mindestens einer Schneidvorrichtung in eine Anzahl von Teiglingen; optional Flachwalzen der Teiglinge; und Ablegen der Teiglinge in Backformen.

Der Teigbandformer ist in Form einer Trichtervorrichtung ausgebildet und verfügt an bzw. unterhalb der Trichteröffnung über mindestens ein Walzenpaar, bevorzugt zwei oder drei Walzenpaare. Die Teigmasse wird durch den Trichter und das mindestens eine Walzenpaar senkrecht bzw. vertikal als homogen geformtes Teigband auf ein zweites, horizontal laufendes Transportband abgelegt.

In einer Ausführungsform kann an diesem zweiten Transportband mindestens eine (erste) Walzvorrichtung vorgesehen. Die Walzvorrichtung umfasst bevorzugt ein Walzwerk mit oben- und untenliegender motorisch betriebener Walze. Es ist auch möglich ein Walzwerk mit mehreren auf einer kreisförmigen oder elliptischen Bahn laufenden Walzen einzusetzen.

In dieser mindestens einen (ersten) Walzvorrichtung kann das Teigband bevorzugt auf eine Dicke von 2 bis 30 mm, bevorzugt 3 bis 20 mm, insbesondere 5 bis 10 mm gewalzt werden. Die Teigstärke des Teigbandes nach Verlassen der Walzvorrichtung wird insbesondere durch das gewünschte Endprodukt bestimmt.

Das Teigband wird anschließend zum Falten in Schritt von dem zweiten Transportband auf ein drittes Transportband überführt. In einer Ausführungsform wird das Teigband zum Zwecke des Faltens auf ein vertikal oder rechtwinklig zum zweiten das Teigband transportierende Transportband angeordnetes weiteres drittes Transportband in Laufrichtung des dritten Transportbandes aufgebracht. Hierbei kann beim Übergang des Teigbandes von dem zweiten Transportband auf das dritte Transportband das Teigband quer zur Laufrichtung des dritten Transportbandes gefaltet werden. Dies kann z. B. durch ein rechtwinkliges mehrschichtiges Ablegen des Teigbandes erfolgen. Das Teigband wird mit einer sehr geringen Fallhöhe dabei übereinandergelegt oder laminiert, um die Bearbeitung mit Hand zu simulieren und dabei die Stabilität der Teigstruktur zu erhöhen. Das Teigband wird in drei bis sechs Schichten laminiert.

In einer weiteren Ausführungsform des vorliegenden Verfahrens wird das gefaltete Teigband in mindestens einer (zweiten) Walzvorrichtung auf eine abschließende Teigstärke bzw. Teigbanddicke von 2 bis 20 mm, bevorzugt 2 bis 10 mm gewalzt. Dabei ist die in der (zweiten) Walzvorrichtung einzustellende Teigdicke wiederum abhängig von der Art der gewünschten Backform.

Diese (zweite) Walzvorrichtung ist insbesondere in Form eines Walzwerkes mit z.B. 8-12 in einer elliptischen Bahn laufenden Walzen oder Schlichtwerken (Kalibrierkopf mit Walzentrommel) ausgebildet, wobei mehrere z.B. drei Schlichtwerke hintereinander angeordnet sein können. Auch ist die Anwendung eines Mehrwalzensystems möglich.

Die Teigbänder weisen nach dem zweiten Walzvorgang typischerweise eine Breite zwischen 200 bis 900, bevorzugt zwischen 300 bis 600 mm auf.

Nach erneutem Walzen des Teigbandes wird dieses unter Verwendung einer Schneidvorrichtung in eine Anzahl von Teiglingen in Längs- und Querrichtung geschnitten. Das Schneiden des Teigbandes erfolgt bevorzugt unter Verwendung einer Schneidwalze und Guillotine.

Während des Schneidprozesses erfolgt zunächst ein Schneiden der Teigbänder in Längsrichtung, und ggf. anschließend in Querrichtung.

Eine Separierung bzw. Auftrennung der geschnittenen Teiglinge wird bevorzugt durch unterschiedliche Bandgeschwindigkeiten der verwendeten Transportbänder bewirkt, wobei durch das Auftrennen der geschnittenen Teigbänder in die Einzelstücke mit unterschiedlicher Größe die unterschiedlichen finalen Gebäckgrößen bestimmt werden.

In einer bevorzugten Ausführungsform werden die Teiglinge portioniert, geformt (rund oder zylindrisch bzw. stangenförmig) und abgelegt. Dafür kann eine Kolbendosieranlage verwendet werden. Durch Einstellung des Kolbenhubs wird das Volumen des Teiglings in Abhängigkeit der Teigdichte festgelegt. Das Teiggewicht wird kontinuierlich gravimetrisch gemessen und das Kolbenvolumen korrigiert.

Im weiteren Verlauf des Verfahrens werden die geformten T eiglinge in den Backformen abgesetzt. Die zum Einsatz kommenden Backformen weisen bevorzugt ein konstantes Verhältnis der Seitenflächen zueinander auf, d. h. die Backformen sind mit einem vorgegebenen Modulmaß vorgegeben. Das konstante Verhältnis der Seitenflächen und das vorgegebene Modulmaß ermöglichen den Transport, Beladung und Entladung der Backformen mit den gleichen Systemen.

Die sich in Schritt d) anschließende Gärung der Teiglinge erfolgt in einer Variante bei Gärtemperaturen zwischen 30 und 35°C, bevorzugt zwischen 32 und 34°C, wobei die Gärzeit zwischen 30 und 120 min, bevorzugt 35 und 115 min, insbesondere bevorzugt zwischen 40 und 100 min beträgt.

Die relative Luftfeuchte kann während der Gärung in der offenen Backform zwischen 75 und 95 %, bevorzugt zwischen 80 und 90 %, insbesondere bevorzugt zwischen 85 und 88 % betragen.

Gärtemperatur, Gärzeit und relative Luftfeuchte während des Gärungsprozesses sind insbesondere abhängig von der Teigzusammensetzung.

Nach dem Gärprozess können die Teiglinge mit Saaten bestreut werden und/oder mit Proteinmischungen besprüht werden. Auch ist eine Oberflächenbearbeitung der gegärten Teiglinge z.B. durch Perforierung möglich.

Wie beschrieben, erfolgt das Abdecken der mit den Teiglingen bestückten Formen mit Formendeckeln in Schritt e), wobei die Bereitstellung der Formendeckel und das Abdecken der Formen durch mindestens ein erstes Robotersystem umfassend mindestens einen mehrachsigen, insbesondere sechsachsigen Roboter mit mindestens einem Greifersystem ausgeführt wird. Es wird auf die obigen Ausführungen zur Ausgestaltung des ersten Robotersystems verwiesen.

Das Backen der Teiglinge in Schritt f) kann bei Temperaturen zwischen 150 und 250 °C, bevorzugt zwischen 240 und180 ° zum Einsatz kommende Backofen eine während des Durchlaufs der Teiglinge durch den Ofen graduell abnehmende Ofentemperatur auf. So kann die Ofentemperatur am Beginn (d. h. Eintritt der ungebackenen Teiglinge in den Ofen) zwischen 200 und 240 °C betragen und am Ende der Backzone (d. h. Austritt der gebackenen Teiglinge aus dem Ofen) zwischen 180 und 200 °C betragen.

In einer Ausführungsform des Schrittes f) beträgt die Backzeit zwischen 30 und 150 min, bevorzugt zwischen 40 und 130 min, insbesondere bevorzugt zwischen 50 und 110 min, ganz besonders bevorzugt zwischen 60 und 100 min in Abhängigkeit des zu backenden Teiges und/oder Teiggewichtes.

Auch wird in einer Ausführungsvariante des vorliegenden Verfahrens eine Konvektion im Backofen in Abhängigkeit des zu backenden Produktes eingesetzt. So können bei bestimmten Backwaren eine vertikale Konvektion von der Ofenunterseite und/oder eine horizontale oder auch vertikale Konvektion auf die Oberfläche der zu backenden Teiglinge überhaupt nicht, nur zu Beginn der Backzeit oder während der gesamten Backzeit wünschenswert sein. Auch ist es möglich, eine eingeschränkte Konvektion von z. B. 20 bis 80 %, bevorzugt 40 bis 60 % einzusetzen. Insbesondere ist es bevorzugt, eine Konvektion von 30 bis 60 % zu Beginn der Backzeit anzuwenden.

Insgesamt stehen im vorliegenden Verfahren im Backprozess vier Möglichkeiten der Wärmeübertragung zur Verfügung: Leitung, Konvektion, Strahlung und/oder Kondensation. Der Backofen weist bevorzugt mehrere verschiedene Backzonen, z.B. bis zu zwölf verschiedene Backzonen auf. Die Strömungsrichtung der Wärmeluft in den Backzonen ist bevorzugt so gestaltet, dass durch die vertikale Strömungsrichtung der Eintrag von Falschluft verhindert wird.

Der Backprozess kann je nach Gebäckart unter 100 % Auslastung der Backfläche oder unter weniger als bis zu 50 % unterhalb der Kapazität des Backofens liegende Auslastung ablaufen, d.h. der Backofen kann mit unterschiedlichen Auslastungsgraden betrieben werden. Um eine gleichmäßige Übertragung der Energie zu ermöglichen, wird eine entsprechende Steuerung der Wärmeübertragung genutzt. Als Energieträger wird vorzugsweise Thermoöl verwendet, das eine exaktere Lückenabsenkung ermöglicht. Durch die wahlweise Zuschaltung von vertikalen Turbulenzen kann mittels der bereits erwähnten Konvektion der Energieeintrag poduktspezifisch exakt geregelt werden.

Nach dem Backprozess werden in Schritt g) des vorliegenden Verfahrens die Deckel der Backformen entfernt. Die abgedeckelten, die Backwaren enthaltenen Backformen werden zu mindestens einem Ablagesystem transportiert, wo die Backwaren aus den Formen entnommen werden und die Backwaren in mindestens einer Transporteinheit zur Kühlung und Konditionierung abgelegt werden. Die Abnahme der Formendeckel, Transport, Entnahme und Ablage der Backwaren werden durch das mindestens eine zweite Robotersystem umfassend einen Master-Roboter und einen Slave-Roboter ausgeführt. Es wird auf die obigen Ausführungen zur Ausgestaltung des zweiten Robotersystems verwiesen.

In einer Ausführungsform wird die mindestens eine Transporteinheit, die in Schritt g) mit Backwaren versehen wird, zur Kühlung in mindestens einen Kühlraum und anschließend zur Konditionierung in mindestens einen Konditionierraum durch jeweils ein Transportsystem umgesetzt.

Es schließt sich in Schritt h) die Konfektionierung (Schneiden, Verpacken) der abgekühlten und konditionierten Backwaren unter Verwendung des mindestens einen dritten Robotersystems an. Es wird auf die obigen Ausführungen zur Ausgestaltung des dritten Robotersystems verwiesen.

Die verpackten Backwaren werden durch das vierte Robotersystem von der Verpackungsmaschine in einen Behälter überführt, welcher in einem abschließenden Schritt i) einer Pasteurisierungsanlage zugeführt wird.

Abschließend erfolgt die Entnahme der Produkte aus den Behältern, z.B. aus Pasteurisationsbehältern und Ablage in Kartons oder ähnlichen Umverpackungen durch mindestens ein fünftes Robotersystem.

Die vorliegende Erfindung wird nachfolgend unter Bezugnahme auf die Figuren an einem Ausführungsbeispiel näher erläutert. Es zeigen:

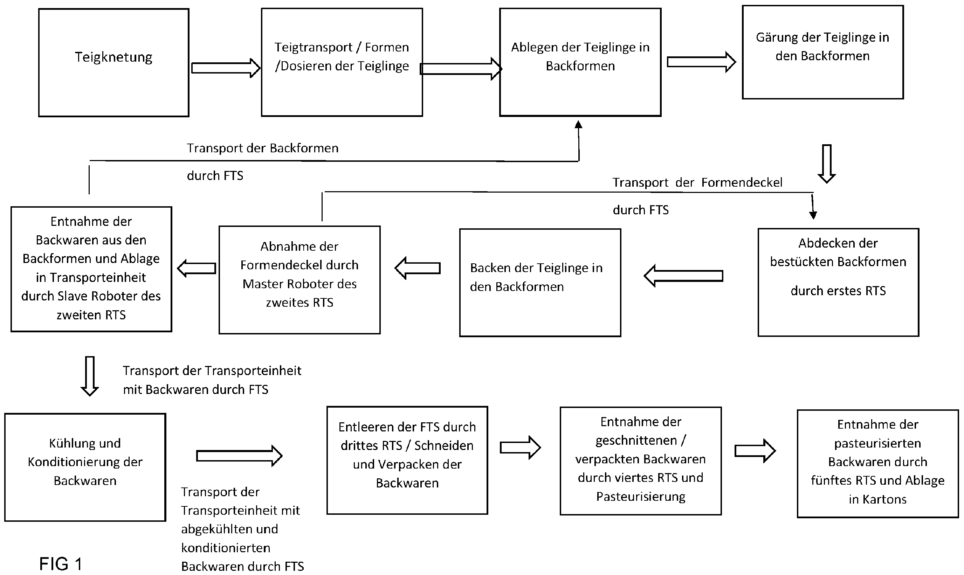

- Figur 1: eine schematische Darstellung der Verfahrensschritte einer Ausführungsform des erfindungsgemäßen Verfahrens.

Figur 1 zeigt eine schematische Übersicht einer Ausführungsform des vorliegenden Verfahrens, wobei in einem Kneter, z.B. einem Batchkneter eine Teigphase aus teigbildenden Rohstoffen, wie Weizenmehl, Wasser und/oder Hefe hergestellt wird.

Die Teiglinge werden portioniert, geformt (rund oder zylindrisch bzw. stangenförmig) und abgelegt.. Dafür wird eine Kolbendosieranlage verwendet. Durch Einstellung des Kolbenhubs wird das Volumen des Teiglings in Abhängigkeit der Teigdichte festgelegt. Das Teiggewicht wird kontinuierlich gravimetrisch gemessen und das Kolbenvolumen korrigiert.

Nach Positionieren und Ablegen der-Teiglinge in den entsprechenden Backformen erfolgt der Gärungsprozess bei variierenden Gärtemperaturen, die in Abhängigkeit der gewünschten Backware gewählt werden.

Nach dem Gärungsprozess können die Teiglinge mit Saaten (z.B. Sesam) bestreut werden oder mit Proteinmischungen besprüht werden.

Ein erstes robotergestütztes Fertigungs-und Transportsystem (RFTS) mit einem ersten Robotersystem RTS mit einem sechsachsigen Roboters und einem Greifersystem entnimmt die Formendeckel aus einem fahrbaren, durch ein FTS (fahrerloses Transportsystem) bewegten Magazin. Das Greifersystem besteht aus einem Greifer für Deckel und Formen und einem dazu parallel montierten Nadelsystem für die Perforierung der während des Gärprozesses gebildeten Teighaut. Parallel zum Nadelsystem wird eine Sprüheinheit für die Oberflächenbenetzung des Teiges mit Flüssigkeit montiert. Weiterhin besteht die Möglichkeit das Greifersystem um weitere technologische Funktionen, wie Oberflächenbearbeitung (Einschneiden, Bestreuen mit Saatgütern) zu erweitern. Das Greifersystem bearbeitet mit geschlossenem Greifer und dadurch fixiertem Deckel die Teighaut und bedeckelt durch Drehung der Achsen im nächsten Arbeitsschritt die Form.

Die Formen werden in den Durchlaufofen transportiert. Mit demselben System werden in einem zweiten Arbeitsablauf Formenverbände, die über ein Transportsystem von der Ofenentladung zurückgeführt werden, entnommen und auf das Transportsystem der Teigdosieranlage abgesetzt. Das Transportsystem besteht aus einem fahrerlosen Transportsystem (FTS) oder einem Transportband. Die Transportsysteme werden gleichzeitig als Puffer für Formen oder Deckel verwendet. Das erste RTS übernimmt als ein System fünf bzw. sechs unterschiedliche Teilfunktionen, die in unmittelbarer oder versetzter zeitlicher Abfolge realisiert werden.

Die Teiglinge werden dem Backofen zugeführt und für einen vorbestimmten Zeitraum, der abhängig ist von der gewünschten Backware, gebacken.

Nach dem Backprozess erfolgen die Formenentleerung und der Transport der Backware, wie z.B. Brotstangen mit einem weiteren, zweiten Robotersystem (RTS). Das System besteht aus einem siebenachsigen Roboter, der als Masterroboter fungiert und einem mit dem Master-Roboter kooperierendem Slave- Roboter. Der Masterroboter entnimmt die Deckel und legt die Deckel auf eine Transportsystem (FTS gestützt). In einer weiteren Funktion werden die Formen gegriffen und wahlweise auf die 7. Achse des Master-Roboters oder auf den Slave-Roboter übergeben. Die Wahl zwischen der 7. Achse und dem Slave-Roboter wird durch Rezeptur vorgegeben. Das Greiferwerkzeug kann wahlweise parallel um weitere Funktionen, wie Besprühen mit Lösungen, Höhenkontrolle mittels Laser, Radarsystemen und optische Kontrolle der Oberfläche des Produktes (z.B. Farbkontrolle) ergänzt werden. Eine weitere Funktion des RFTs ist die Palettierung und Depalettierung der Formenverbände in/aus ein Transportsystem.

Der Slave- Roboter trägt das Produkt zur Transporteinheit (Regalwagen), schließt die Greifer, dreht das Produkt und setzt es auf die Ablage der Transporteinheit (Regalwagen). In einer weiteren Funktion übernimmt der Slave- Roboter sortenspezifisch das Produkt von der 7. Achse des Master-Roboters, besprüht die Oberfläche und legt das Produkt auf die Ablage der Transporteinheit.

Das aus einem siebenachsigen Master-Roboter und einem Slave- Roboter bestehenden zweite RFTS übernimmt damit sieben bis fünfzehn, vorzugsweise zehn unterschiedliche Teilfunktionen, die in unmittelbarer oder zeitlich versetzter Abfolge realisiert werden.

Ein weiteres, drittes Robotersystem, das aus einem sechsachsigen Roboter besteht, entleert nach der Kühlung die Transportsysteme und setzt die Produkte in das Infeed der Schneidemaschinen ab. Parallel zur Transportfunktion realisiert der Roboter mit einer Sprühvorrichtung, die im Greiferwerkzeug integriert ist, die Desinfektion der Oberfläche durch Besprühung mit extrahierten Gewürzextrakten oder anderen, fungizid wirkenden Lösungen.

Nach der Verpackung übernimmt ein weiteres, viertes Robotersystem die Entnahme der verpackten Produkte von der Verpackungsmaschine nachlaufendem Transportband und legt die Packungen in ein Behälter. Die vollen Behälter werden auf ein Transportsystem gestapelt und durch Förderfahrzeuge, bevorzugt einem FTS, zur Pasteurisieranlage transportiert.

Die Entnahme der Produkte aus den Behältern, z.B. aus Pasteurisationsbehältern und Ablage in Kartons oder ähnlichen Umverpackungen übernimmt ein weiteres, fünftes Robotersystem.

Die fahrerlosen Transportsysteme übernehmen die logistischen Verbindungen der Prozesselemente des Liniensystems. Sie ersetzen teilweise starre, ortsunveränderliche Transportsysteme. Dadurch können logistische Abläufe variiert und zukünftige technologische Erweiterungen integriert werden. In einem Ausführungsbeispiel erfassen FTS die Transporteinheiten (Regalwagen), die vorher von einem RFTs mit Brotstangen beschickt wurden. Die Transporteinheiten werden durch die FTS in einen Kühlraum transportiert und auf einen definierten Platz abgesetzt und registriert. Nach einer festgelegten Kühlzeit werden die Transportsysteme vom Kühlraum in den Konditionierraum umgesetzt und nach einer festgelegten Konditionierzeit durch das FTS zum RFTs transportiert. Dort erfolgen die Entnahme der Brotstangen aus den Transportsystemen und die Beschickung der Schneideanlagen.

## Patentansprüche

1. Anlage zur Durchführung eines Verfahrens zur kontinuierlichen Herstellung von Backwaren, umfassend
- mindestens eine Knetvorrichtung zur Herstellung eines Teiges,
- mindestens eine Vorrichtung zum Transport des Teiges zu mindestens eines Dosieranlage zur Portionierung von Teiglingen und Füllen der Formen;
- mindestens ein erstes Robotersystem umfassend mindestens einen mehrachsigen, insbesondere sechsachsigen Roboter mit mindestens einem Greifersystem zur Bereitstellung von Formendeckeln und zum Abdecken der mit den Teiglingen bestückten Formen,
- mindestens eine Gärvorrichtung,
- mindestens einen Backofen zum Backen der Teiglinge in den abgedeckten Formen zu Backwaren,
- mindestens ein zweites Robotersystem umfassend mindestens einen mehrachsigen, insbesondere siebenachsigen Master-Roboter, und mindestens einen mit dem Master-Roboter zusammenwirkenden Slave-Roboter,
wobei der mindestens eine Master-Roboter mit mindestens einem Greifersystem die Abnahme der Formendeckel von den Formen nach dem Backprozess, und Übergabe der abgedeckelten Formen an den mindestens einen Slave-Roboter bewirkt, und
wobei der mindestens eine Slave-Roboter die abgedeckelten Formen und/oder Formenverbände zu mindestens einem Ablagesystem transportiert, die Backwaren aus den Formen entnimmt und die Backwaren auf mindestens eine Transporteinheit zur Kühlung und Konditionierung ablegt;
- mindestens ein drittes Robotersystem umfassend mindestens einen mehrachsigen, insbesondere sechsachsigen Roboter, mit mindestens einem Greifersystem zur Entnahme der abgekühlten Backwaren aus der Transporteinheit und Übergabe an mindestens eine Vorrichtung zum Schneiden der Backwaren und/oder eine Vorrichtung zum Verpacken der Backwaren;
- optional mindestens ein viertes Robotersystem umfassend mindestens einen mehrachsigen Roboter mit mindestens einem Greifersystem zur Entnahme der geschnittenen und/ oder verpackten Backwaren aus der Schneid - und/oder Verpackungsvorrichtung und weiteren Ablage und Verarbeitung, und
- optional mindestens ein fünftes Robotersystem zur Entnahme der Produkte aus den Behältern, insbesondere aus Pasteurisationsbehältern und Ablage in Kartons oder Umverpackungen.

2. Anlage nach Anspruch 1, **dadurch gekennzeichnet, dass** der mindestens eine mehrachsige Roboter des mindestens einen ersten Robotersystem mindestens ein Nadelsystem zur Perforierung der während des Gärprozesses gebildeten Teighaut auf den Teiglingen, mindestens eine Sprüheinheit für die Oberflächenbenetzung der Teiglinge und weitere technologischen Funktionen, insbesondere zur Oberflächenbearbeitung der Teiglinge, wie Einschneiden der Teiglinge oder Bestreuen der Teiglinge mit Saatgütern, umfasst.

3. Anlage nach einem der vorhergehenden Ansprüche, **dadurch gekennzeichnet, dass** der mindestens eine mehrachsige Roboter des mindestens einen ersten Robotersystems Formen, die von mindestens einem Transportsystem nach dem Backprozess und der Entladung der Backwaren aus den Formen bereitgestellt werden, aus diesem Transportsystem entnimmt und einem weiteren Transportsystem zur Bereitstellung der Formen für die Teigdosierungsvorrichtung und Vorrichtung zum Bestücken von Formen mit den Teiglingen übergibt.

4. Anlage nach einem der vorhergehenden Ansprüche, **dadurch gekennzeichnet, dass** der mindestens eine Masterroboter des zweiten Robotersystems die von den Formen abgenommenen Formendeckel auf ein Transportsystem ablegt, welches die Formendeckel zu dem mindestens einem ersten Robotersystem transportiert, welches die mit den Teiglingen bestückten Formen abdeckt.

5. Anlage nach einem der vorhergehenden Ansprüche, **dadurch gekennzeichnet, dass** das Greifersystem des Master-Roboters weitere Funktionen aufweist, insbesondere Besprühen mit Lösungen, Höhenkontrolle mittels Laser, Radarsystemen und optische Kontrolle der Oberfläche des Produktes.

6. Anlage nach einem der vorhergehenden Ansprüche, **dadurch gekennzeichnet, dass** der mindestens eine Roboter des dritten Robotersystems mindestens eine Sprühvorrichtung umfasst.

7. Anlage nach einem der vorhergehenden Ansprüche, **dadurch gekennzeichnet, dass** die Transportsysteme fahrerlose Transportsysteme sind.

8. Anlage nach einem der vorhergehenden Ansprüche, **dadurch gekennzeichnet, dass** mindestens ein Transportsystem die mindestens eine Transporteinheit mit den zur Kühlung und Konditionierung abgelegten Backwaren erfasst und in mindestens einen Kühlraum und/oder mindestens einen Konditionierraum umsetzt und nach einer vorbestimmtem Zeit zu dem mindestens einen dritten Robotersystem zur Entnahme aus der Transporteinheit und Konfektionierung umsetzt.

9. Anlage nach einem der vorhergehenden Ansprüche, **dadurch gekennzeichnet, dass** die Robotersysteme und Transportsysteme durch ein Kontroll- und Steuerungssystem miteinander verknüpft sind.

10. Verfahren zur kontinuierlichen Herstellung von Backwaren, insbesondere Backwaren aus Weizenteigen oder Roggenteigen, in einer Anlage nach einem der vorhergehenden Ansprüche umfassend die Schritte:
a) Herstellen von mindestens einem Teig in mindestens einer Knetvorrichtung;
b) Transportieren des Teiges zu mindestens einer Anlage zur Bereitstellung von Teiglingen
c) Dosieren der Teiglinge in Formen;
d) Gärung der Teiglinge in den Formen; e) Abdecken der mit den Teiglingen bestückten Formen mit Formendeckeln, wobei die Bereitstellung der Formendeckel und das Abdecken der Formen durch mindestens ein erstes Robotersystem umfassend mindestens einen mehrachsigen, insbesondere sechsachsigen Roboter mit mindestens einem Greifersystem ausgeführt wird;
f) Backen der Teiglinge in den Formen zu Backwaren;
g) Abnahme der Formendeckel von den Formen nach dem Backprozess; Ablage der abgedeckelten Formen auf mindestens einem Transportsystem, Entnahme der Backwaren aus den Formen und Ablegen der Backwaren in mindestens einer Transporteinheit zur Kühlung und Konditionierung, wobei die Abnahme der Formendeckel, Transport, Entnahme und Ablage der Backwaren durch mindestens ein zweites Robotersystem umfassend einen Master-Roboter und einen Slave-Roboter ausgeführt werden;
h) Kühlen und Konditionierung der Backwaren, insbesondere in einem Reinraum;
i) Entnahme der gekühlten und konditionierten Backwaren von der Transporteinheit durch mindestens ein drittes Robotersystem und Übergabe an mindestens eine Vorrichtung zum Schneiden und/oder eine Vorrichtung zum Verpacken der Backwaren;
j) Schneiden und/oder Verpacken der Backwaren,
k) optional Entnahme der geschnittenen und/oder verpackten Backwaren durch mindestens ein viertes Robotersystem und anschließende Pasteurisierung, und
l) optional Entnahme der Produkte aus den Behältern, insbesondere aus Pasteurisationsbehältern und Ablage in Kartons oder Umverpackungen durch mindestens ein fünftes Robotersystem.

11. Verfahren nach Anspruch 10, **dadurch gekennzeichnet, dass** die mindestens eine Transporteinheit, die in Schritt g) mit Backwaren versehen wird, zur Kühlung in mindestens einen Kühlraum und anschließend zur Konditionierung in mindestens einen Konditionierraum durch jeweils ein Transportsystem umgesetzt wird.

## Claims

1. An assembly for carrying out a method for the continuous production of bakery products, comprising
- at least one kneading device for producing a dough,
- at least one device for transporting the dough to at least one dosing unit for portioning dough pieces and filling the molds;
- at least one first robot system comprising at least one multi-axis, in particular six-axis robot with at least one gripper system for providing mold lids and for covering the molds loaded with the dough pieces,
- at least one fermenting device,
- at least one oven to bake the dough pieces in the covered molds to obtain bakery products,
- at least one second robot system comprising at least one multi-axis, in particular seven-axis master robot, and at least one slave robot cooperating with the master robot,
wherein the at least one master robot with at least one gripper system effects the removal of the mold lids from the molds after the baking process and the handover of the covered molds to the at least one slave robot, and
wherein the at least one slave robot transports the covered molds and/or mold groups to at least one depositing system, removes the bakery products from the molds and deposits the bakery products on at least one transport unit for cooling and conditioning;
- at least one third robot system comprising at least one multi-axis, in particular six-axis robot, with at least one gripper system for removal of the cooled bakery products from the transport unit and handover to at least one device for cutting the bakery products and/or a device for packaging the bakery products;
- optionally at least one fourth robot system comprising at least one multi-axis robot with at least one gripper system for removal of the cut and/or packaged bakery products from the cutting and/or packaging device and further deposition and processing, and
- optionally at least one fifth robot system for removal of the products from the containers, in particular from pasteurization containers, and deposition in cartons or outer packagings.

2. The assembly according to claim 1, **characterized in that** the at least one multi-axis robot of the at least one first robot system comprises at least one needle system for perforating the dough skin formed on the dough pieces during the fermentation process, at least one spraying unit for wetting the surface of the dough pieces and further technological functions, in particular for surface treatment of the dough pieces, such as cutting into the dough pieces or sprinkling the dough pieces with seeds.

3. The assembly according to any of the preceding claims, **characterized in that** the at least one multi-axis robot of the at least one first robot system removes molds, which are provided by at least one transport system after the baking process and after unloading the bakery products from the molds, from this transport system and hands them over to a further transport system for providing the molds for the dough dosing device and device for loading molds with the dough pieces.

4. The assembly according to any of the preceding claims, **characterized in that** the at least one master robot of the second robot system deposits the mold lids removed from the molds on a transport system, which transports the mold lids to the at least one first robot system which covers the molds loaded with the dough pieces.

5. The assembly according to any of the preceding claims, **characterized in that** the gripper system of the master robot has further functions, in particular spraying with solutions, height control by means of lasers, radar systems and optical control of the surface of the product.

6. The assembly according to any of the preceding claims, **characterized in that** the at least one robot of the third robot system comprises at least one spraying device.

7. The assembly according to any of the preceding claims, **characterized in that** the transport systems are driverless transport systems.

8. The assembly according to any of the preceding claims, **characterized in that** at least one transport system seizes the at least one transport unit with the bakery products deposited for cooling and conditioning and transfers them to at least one cooling room and/or at least one conditioning room and, after a predetermined time, transfers the same to the at least one third robot system for removal from the transport unit and packaging.

9. The assembly according to any of the preceding claims, **characterized in that** the robot systems and transport systems are linked to each other by a monitoring and control system.

10. A method for the continuous production of bakery products, in particular bakery products made of wheat doughs or rye doughs, in an assembly according to any of the preceding claims, comprising the steps:
a) producing at least one dough in at least one kneading device;
b) transporting the dough to at least one assembly for providing dough pieces;
c) dosing the dough pieces into molds;
d) fermenting the dough pieces in the molds;
e) covering the molds loaded with the dough pieces with mold lids, wherein the provision of the mold lids and the covering of the molds is carried out by at least one first robot system comprising at least one multi-axis, in particular six-axis robot with at least one gripper system;
f) baking the dough pieces in the molds to obtain bakery products;
g) removal of the mold lids from the molds after the baking process; deposition of the covered molds on at least one transport system, removal of the bakery products from the molds and deposition of the bakery products in at least one transport unit for cooling and conditioning, wherein the removal of the mold lids, transport, removal and deposition of the bakery products are carried out by at least one second robot system comprising a master robot and a slave robot;
h) cooling and conditioning of the bakery products, in particular in a clean room;
i) removal of the cooled and conditioned bakery products from the transport unit by at least one third robot system and handover to at least one device for cutting and/or a device for packaging the bakery products;
j) cutting and/or packaging of the bakery products,
k) optionally removal of the cut and/or packaged bakery products by at least one fourth robot system and subsequent pasteurization, and
l) optionally removal of the products from the containers, in particular from pasteurization containers and deposition in cartons or outer packagings by at least one fifth robot system.

11. The method according to claim 10, **characterized in that** the at least one transport unit, which in step g) is provided with bakery products, is transferred into at least one cooling room for cooling and subsequently into at least one conditioning room for conditioning by a respective transport system.

## Revendications

1. Installation pour la mise en oeuvre d'un procédé de fabrication continue de produits de boulangerie-pâtisserie, comprenant
- au moins un dispositif de pétrissage pour la fabrication d'une pâte,
- au moins un dispositif pour le transport de la pâte vers au moins une installation de dosage pour le portionnement de pâtons et le remplissage des moules ;
- au moins un premier système robotique comprenant au moins un robot à plusieurs axes, en particulier à six axes, avec au moins un système de préhension pour fournir de couvercles de moules et pour couvrir les moules garnis de pâtons,
- au moins un dispositif de fermentation,
- au moins un four pour faire cuire les pâtons dans les moules couverts pour obtenir des produits de boulangerie-pâtisserie,
- au moins un deuxième système robotique comprenant au moins un robot maître à plusieurs axes, en particulier à sept axes, et au moins un robot esclave coopérant avec le robot maître,
ledit au moins un robot maître avec au moins un système de préhension effectuant le retrait des couvercles de moules des moules après le processus de cuisson, et le transfert des moules découverts vers ledit au moins un robot esclave, et
ledit au moins un robot esclave transportant les moules et/ou les groupes de moules découverts vers au moins un système de dépôt, retirant les produits de boulangerie-pâtisserie des moules et déposant les produits de boulangerie-pâtisserie sur au moins une unité de transport pour le refroidissement et le conditionnement ;
- au moins un troisième système robotique comprenant au moins un robot à plusieurs axes, en particulier à six axes, avec au moins un système de préhension pour prélever les produits de boulangerie-pâtisserie refroidis de l'unité de transport et les transférer à au moins un dispositif pour couper les produits de boulangerie-pâtisserie et/ou un dispositif pour emballer les produits de boulangerie-pâtisserie ;
- en option, au moins un quatrième système robotique comprenant au moins un robot à plusieurs axes avec au moins un système de préhension pour prélever les produits de boulangerie-pâtisserie coupés et/ou emballés du dispositif de coupe et/ou d'emballage et les déposer et les traiter ultérieurement, et
- en option, au moins un cinquième système robotique pour prélever les produits des récipients, en particulier des récipients de pasteurisation, et les déposer dans des cartons ou des suremballages.

2. Installation selon la revendication 1, **caractérisée en ce que** ledit au moins un robot à plusieurs axes dudit au moins un premier système robotique comprend au moins un système d'aiguilles pour perforer la peau de pâte formée sur les pâtons pendant le processus de fermentation, au moins une unité de pulvérisation pour mouiller la surface des pâtons et d'autres fonctions technologiques, en particulier pour le traitement de la surface des pâtons, comme l'incision des pâtons ou le saupoudrage des pâtons avec des semences.

3. Installation selon l'une quelconque des revendications précédentes, **caractérisée en ce que** ledit au moins un robot à plusieurs axes dudit au moins un premier système robotique prélève des moules, qui sont fournis par au moins un système de transport après le processus de cuisson et le déchargement des produits de boulangerie-pâtisserie des moules, de ce système de transport et les transfère à un autre système de transport pour fournir les moules pour le dispositif de dosage de pâte et le dispositif de chargement des moules avec les pâtons.

4. Installation selon l'une quelconque des revendications précédentes, **caractérisée en ce que** ledit au moins un robot maître du deuxième système robotique dépose les couvercles de moules prélevés des moules sur un système de transport qui transporte les couvercles de moules vers ledit au moins un premier système robotique qui recouvre les moules garnis de pâtons.

5. Installation selon l'une quelconque des revendications précédentes, **caractérisée en ce que** le système de préhension du robot maître présente d'autres fonctions, en particulier asperger avec des solutions, contrôler la hauteur au moyen de lasers, de systèmes radars et du contrôle optique de la surface du produit.

6. Installation selon l'une quelconque des revendications précédentes, **caractérisée en ce que** ledit au moins un robot du troisième système robotique comprend au moins un dispositif de pulvérisation.

7. Installation selon l'une quelconque des revendications précédentes, **caractérisée en ce que** les systèmes de transport sont des systèmes de transport sans conducteur.

8. Installation selon l'une quelconque des revendications précédentes, **caractérisée en ce qu'**au moins un système de transport saisit ladite au moins une unité de transport avec les produits de boulangerie-pâtisserie déposés pour le refroidissement et le conditionnement et les transfère dans au moins un espace de refroidissement et/ou au moins un espace de conditionnement et, après un temps prédéterminé, les transfère vers ledit au moins un troisième système robotique pour les prélever de l'unité de transport et les confectionner.

9. Installation selon l'une quelconque des revendications précédentes, **caractérisée en ce que** les systèmes robotiques et les systèmes de transport sont reliés entre eux par un système de contrôle et de commande.

10. Procédé de fabrication continue de produits de boulangerie-pâtisserie, en particulier de produits de boulangerie-pâtisserie à base de pâtes de blé ou de pâtes de seigle, dans une installation selon l'une quelconque des revendications précédentes comprenant les étapes :
a) fabrication d'au moins une pâte dans au moins un dispositif de pétrissage ;
b) transport de la pâte vers au moins une installation de préparation de pâtons ;
c) dosage des pâtons dans des moules ;
d) fermentation des pâtons dans les moules ;
e) recouvrement des moules garnis des pâtons avec des couvercles de moules, la fourniture des couvercles de moules et le recouvrement des moules étant effectués par au moins un premier système robotique comprenant au moins un robot à plusieurs axes, en particulier à six axes, avec au moins un système de préhension ;
f) cuisson des pâtons dans les moules pour obtenir des produits de boulangerie-pâtisserie ;
g) retrait des couvercles de moules des moules après le processus de cuisson ; dépôt des moules découverts sur au moins un système de transport, prélèvement des produits de boulangerie-pâtisserie des moules et dépôt des produits de boulangerie-pâtisserie dans au moins une unité de transport pour le refroidissement et le conditionnement, le retrait des couvercles de moules, le transport, le prélèvement et le dépôt des produits de boulangerie-pâtisserie étant effectués par au moins un deuxième système robotique comprenant un robot maître et un robot esclave ;
h) refroidissement et conditionnement des produits de boulangerie-pâtisserie, en particulier dans une salle blanche ;
i) prélèvement des produits de boulangerie-pâtisserie refroidis et conditionnés de l'unité de transport par au moins un troisième système robotique et transfert vers au moins un dispositif pour la coupe et/ou un dispositif pour l'emballage des produits de boulangerie-pâtisserie ;
j) coupe et/ou emballage des produits de boulangerie-pâtisserie ;
k) en option, prélèvement des produits de boulangerie-pâtisserie coupés et/ou emballés par au moins un quatrième système robotique, suivi d'une pasteurisation, et
l) en option, prélèvement des produits des récipients, en particulier des récipients de pasteurisation, et dépôt dans des cartons ou des suremballages par au moins un cinquième système robotique.

11. Procédé selon la revendication 10, **caractérisé en ce que** ladite au moins une unité de transport, qui est munie de produits de boulangerie-pâtisserie à l'étape g), est déplacée pour le refroidissement dans au moins un espace de refroidissement et ensuite pour le conditionnement dans au moins un espace de conditionnement par respectivement un système de transport.
